# EUROPÄISCHE PATENTANMELDUNG

(11) **EP 4 249 448 A1**
(43) Veröffentlichungstag der Anmeldung: **27.09.2023**
(21) Anmeldenummer: 23160069.3
(22) Anmeldetag: 03.03.2023
(51) Int. Cl.: C04B 28/18

(54) **VERWENDUNG VON LD-SCHLACKE ZUR HERSTELLUNG VON DAMPFGEHÄRTETEN CSH-BAUSTOFFEN**

(30) Priorität: 11.03.2022 BE 202205169; 11.03.2022 DE 102022202474
(71) Anmelder: ThyssenKrupp MillServices & Systems GmbH, 46149 Oberhausen (DE); thyssenkrupp AG, 45143 Essen (DE)
(72) Erfinder: Dohlen, Michael, 47058 Duisburg (DE)
(74) Vertreter: thyssenkrupp Intellectual Property GmbH

(57) **Zusammenfassung**

Die vorliegende Erfindung betrifft ein dampfgehärteten CSH-Baustoff, wobei der dampfgehärtete CSH-Baustoff aus einem ersten Bindemittel und einem Feinsand hergestellt ist, wobei das erste Bindemittel ausgewählt ist aus der Gruppe umfassend Kalk, gebrannter Kalk, Zementklinker, dadurch gekennzeichnet, dass der dampfgehärtete CSH-Baustoffaus dem ersten Bindemittel und einem zweiten Bindemittel hergestellt ist, wobei das zweite Bindemittel eine LD-Schlacke ist.

## Beschreibung

Die Erfindung betrifft dampfgehärtete (hydrothermal gehärtete) CSH-Baustoffe, insbesondere Porenbeton (veraltet Gasbeton) oder Kalksandstein, welche mit LD-Schlacke anstelle von Kalk als Primärrohstoff hergestellt werden und somit zur Verringerung der CO₂-Emissionen und damit zur Nachhaltigkeit von Baustoffen beitragen.

Herkömmlich werden beispielsweise gebrannter Kalk oder Zementklinker mit fein vermahlenem Sand oder Flugasche mit etwas Aluminium und Wasser vermischt, in Form gebracht und dampfgehärtet. Auf diese Weise werden sehr leichte und gut isolierende dampfgehärtete CSH-Baustoffe, insbesondere Porenbeton erzeugt. Kalksandstein zählt wie Porenbeton zu den dampfgehärteten Baustoffen. Allerdings wird bei der Herstellung von Kalksandstein nicht gebläht oder porosiert. Ein dampfgehärteter CSH-Baustoff wie Porenbeton unterscheidet sich damit von klassischem Beton, da ein dampfgehärteter Baustoff zur Herstellung autoklaviert wird. Weiter ist auch die Zusammensetzung der Gesteinskörnung verschieden, sodass Porenbeton streng genommen kein Beton ist.

Aus der DE 197 50 162 A1 sind Bauelemente sowie ein Verfahren zu deren Herstellung und deren Verwendung bekannt.

Aus der DE 28 37 854 A1 ist ein Verfahren und die Herstellung von Kalksteingranulaten bekannt.

Aus der FR 1 092 249 A ist ein Verfahren zur Herstellung von porösen Leichtbauelementen aus Porenbeton bekannt.

Ein entscheidender Nachteil ist jedoch, dass die Herstellung des Bindemittels große Mengen an CO₂ freisetzt. Weiter wird dabei auf Primärrohstoffe zurückgegriffen.

Aufgabe der Erfindung ist es, ein Ersatzbindemittel bereitzustellen, welches möglichst CO₂-neutral ist und kein Primärrohstoff ist.

Gelöst wird diese Aufgabe durch den dampfgehärteten CSH-Baustoff mit den in Anspruch 1 angegebenen Merkmalen, die Verwendung mit den in Anspruch 6 angegebenen Merkmalen sowie das Verfahren mit den in Anspruch 8 angegebenen Merkmalen. Vorteilhafte Weiterbildungen ergeben sich aus den Unteransprüchen, der nachfolgenden Beschreibung sowie den Zeichnungen.

Der erfindungsgemäße dampfgehärtete CSH-Baustoff, insbesondere Porenbeton oder Kalksandstein, ist aus einem ersten Bindemittel, einem Feinsand und Wasser hergestellt. Als Feinsand wird typischerweise gemahlener Quarzsand verwendet, welcher keine zu grobe Körnung aufweist, was den Unterschied zum klassischen Beton macht, wo auch eine gröbere Gesteinskörnung wünschenswert ist. Das erste Bindemittel ist ausgewählt aus der Gruppe umfassend Kalk, gebrannter Kalk, Zementklinker.

Erfindungsgemäß ist der dampfgehärtete CSH-Baustoff aus dem ersten Bindemittel und einem zweiten Bindemittel hergestellt, wobei das zweite Bindemittel eine LD-Schlacke ist. LD-Schlacke entsteht bei der Stahlerzeugung nach dem Linz-Donawitz-Verfahren, auch Blasstahlverfahren oder LD-Konverterverfahren, genannt. Diese LD-Schlacke enthält freies Calciumoxid, sodass es zu einer Hydratisierung kommen kann und die LD-Schlacke damit als Bindemittel geeignet ist. Damit hat sich gerade die LD-Schlacke als hervorragendes Substitut für Primärrohstoffe zur Herstellung von dampfgehärteten CSH-Baustoffen herausgestellt. Der dampfgehärtete CSH-Baustoff ist mit einer Mischung des ersten Bindemittels und des zweiten Bindemittels in einem Verhältnis von wenigstens 2:1 hergestellt. Auch wenn der Kalk als primärer Rohstoff nicht vollständig ersetzt wird, ist doch eine deutliche Reduktion des Primärrohstoffverbrauchs und damit Verbunden auch der CO₂-Emission erreicht.

Da die Prozesse beim Abbinden eines CSH-Baustoffes insgesamt sehr komplex sind und dadurch die Definition der exakten chemischen Struktur des fertigen Baustoffes praktisch unmöglich ist, ist eine Charakterisierung des fertigen Produkts über die zur Herstellung verwendeten Ausgangsstoffe in diesem Fall zielführend.

In einer weiteren Ausführungsform der Erfindung ist der dampfgehärtete CSH-Baustoff mit einer Mischung des ersten Bindemittels und des zweiten Bindemittels in einem Verhältnis von wenigstens 3:2, bevorzugt von wenigstens 5:1, besonders bevorzugt von wenigstens 10:1 hergestellt. Auch wenn der Kalk als primärer Rohstoff nicht vollständig ersetzt wird, ist doch eine deutliche Reduktion des Primärrohstoffverbrauchs und damit Verbunden auch der CO₂-Emission erreicht.

In einer weiteren Ausführungsform der Erfindung wird der dampfgehärtete CSH-Baustoff mit einer LD-Schlacke mit einer Körnung von 0 bis < 2 mm hergestellt. Dieses bedeutet, dass die LD-Schlacke in entsprechender Körnung bereitgestellt wird. Somit ist aber auch eine entsprechende Gesteinskörnung im fertigen Produkt, beispielsweise im Kalksandstein, zu finden. Der Blaine-Wert der LD-Schlacke liegt bevorzugt zwischen 3.000 und 3.500 cm²/g. Somit bezieht sich der Blaine-Wert auf die zur Herstellung bereitgestellte LD-Schlacke als Bindemittel vor der Herstellung des CSH-Baustoffs und nicht auf das fertige Produkt. Bevorzugt wird daher die LD-Schlacke gemahlen und weiter optional gesiebt.

In einer weiteren Ausführungsform der Erfindung ist der dampfgehärtete CSH-Baustoff ein Porenbeton. Der dampfgehärtete CSH-Baustoff ist aus dem ersten Bindemittel, dem zweiten Bindemittel, dem Feinsand sowie einem Treibmittel und Wasser hergestellt. Das typische Treibmittel ist Aluminiumpulver oder Aluminiumpaste.

In einem weiteren Aspekt betrifft die Erfindung die Verwendung einer LD-Schlacke zur Herstellung eines erfindungsgemäßen dampfgehärteten CSH-Baustoffs, insbesondere Porenbeton oder Kalksandstein. Gerade LD-Schlacke, welche aufgrund des hydratisierungsfähigen Anteils für viele Anwendungen unverarbeitet nicht oder nur begrenzt verwendbar ist, hat sich hier als Ersatzstoff als überraschend gut geeignet gezeigt. Hierdurch unterscheidet sich die LD-Schlacke von anderen Schlacken, selbst aus vergleichbaren anderen metallurgischen Prozessen, sodass sich gerade die LD-Schlacke als überraschend gut geeignet gezeigt hat.

In einer weiteren Ausführungsform der Erfindung ist die LD-Schlacke nur zerkleinert, insbesondere gemahlen, und weist keine Zuschlagsstoffe auf. Die LD-Schlacke wird also chemisch so verwendet, wie diese aus dem LD-Konverter entnommen wird. Dieses bedeutet eben auch, dass keine weiteren Rohstoffe benötigt werden.

In einem weiteren Aspekt betrifft die Erfindung ein Verfahren zur Herstellung eines dampfgehärteten CSH-Baustoffs, insbesondere Porenbeton oder Kalksandstein. Das Verfahren weist die folgenden Schritte auf:
a) Mischen eines ersten Bindemittels und eines zweiten Bindemittels und eines Feinsandes,
b) Dampfhärten der Mischung aus Schritt a).

Gegenüber dem herkömmlichen Verfahren unterscheidet sich das Verfahren nur dadurch, dass zwei Bindemittel gemischt werden.

In einer weiteren Ausführungsform der Erfindung werden in Schritt a) zusätzlich ein Treibmittel und Wasser mit vermischt. Als Treibmittel wird beispielsweise und insbesondere Aluminiumpulver oder Aluminiumpaste ausgewählt.

## Patentansprüche

1. Dampfgehärteter CSH-Baustoff, wobei der dampfgehärtete CSH-Baustoff aus einem ersten Bindemittel, einem Feinsand und Wasser hergestellt ist, wobei das erste Bindemittel ausgewählt ist aus der Gruppe umfassend Kalk, gebrannter Kalk, Zementklinker, **dadurch gekennzeichnet, dass** der dampfgehärtete CSH-Baustoff aus dem ersten Bindemittel und einem zweiten Bindemittel hergestellt ist, wobei das zweite Bindemittel eine LD-Schlacke ist, wobei dampfgehärtete CSH-Baustoff mit einer Mischung des ersten Bindemittels und des zweiten Bindemittels in einem Verhältnis von wenigstens 2:1 hergestellt ist.

2. Dampfgehärteter CSH-Baustoff nach Anspruch 1, **dadurch gekennzeichnet, dass** der dampfgehärtete CSH-Baustoff mit einer Mischung des ersten Bindemittels und des zweiten Bindemittels in einem Verhältnis von wenigstens 3:2, bevorzugt von wenigstens 5:1, besonders bevorzugt von wenigstens 10:1 hergestellt ist.

3. Dampfgehärteter CSH-Baustoff nach einem der vorstehenden Ansprüche, **dadurch gekennzeichnet, dass** der dampfgehärtete CSH-Baustoff mit einer LD-Schlacke mit einer Körnung von 0 bis < 2 mm hergestellt.

4. Dampfgehärteter CSH-Baustoff nach einem der vorstehenden Ansprüche, **dadurch gekennzeichnet, dass** die LD-Schlacke einen Blaine-Wert zwischen 3.000 und 3.500 cm²/g aufweist.

5. Dampfgehärteter CSH-Baustoff nach einem der vorstehenden Ansprüche, **dadurch gekennzeichnet, dass** der dampfgehärtete CSH-Baustoff ein Porenbeton ist, wobei der dampfgehärtete CSH-Baustoff aus dem ersten Bindemittel, dem zweiten Bindemittel, dem Feinsand sowie einem Treibmittel und Wasser hergestellt ist.

6. Verwendung einer LD-Schlacke zur Herstellung eines dampfgehärteten CSH-Baustoffs nach einem der vorstehenden Ansprüche.

7. Verwendung nach Anspruch 6, **dadurch gekennzeichnet, dass** die LD-Schlacke nur zerkleinert ist und keine Zuschlagsstoffe aufweist.

8. Verfahren zur Herstellung eines dampfgehärteten CSH-Baustoffs nach einem der Ansprüche 1 bis 5, wobei das Verfahren die folgenden Schritte aufweist:
a) Mischen eines ersten Bindemittels, eines zweiten Bindemittels und eines Feinsandes mit Wasser,
b) Dampfhärten der Mischung aus Schritt a),
wobei als zweites Bindemittel eine LD-Schlacke ausgewählt wird.

9. Verfahren zur Herstellung eines dampfgehärteten CSH-Baustoffs, nämlich Porenbeton, nach Anspruch 8, **dadurch gekennzeichnet, dass** in Schritt a) zusätzlich ein Treibmittel und Wasser mit vermischt werden.
